# EUROPÄISCHE PATENTSCHRIFT

(11) **EP 2 189 686 B1**
(45) Veröffentlichungstag und Bekanntmachung des Hinweises auf die Patenterteilung: **21.09.2011**
(21) Anmeldenummer: 09012127.8
(22) Anmeldetag: 23.09.2009
(51) Int. Cl.: F16J 15/02, F16L 5/08

(54) **Dichtungselement**
Seal element
Elément d'étanchéité

(30) Priorität: 24.11.2008 DE 102008058743
(43) Veröffentlichungstag der Anmeldung: 26.05.2010
(73) Patentinhaber: Poloplast GmbH & Co. KG, 4060 Leonding (AT)
(72) Erfinder: Felber, Simone, Dipl. Ing., 4863 Seewalchen am Attersee (AT); Mayrbäurl, Erwin Werner, Dipl. Ing., 4481 Asten (AT)
(74) Vertreter: Weber, Joachim

(56) Entgegenhaltungen:
- EP-A- 0 355 325
- EP-A- 0 838 623
- EP-A- 1 837 572
- WO-A-01/81807
- WO-A-2006/118747

## Beschreibung

Die Erfindung bezieht sich auf ein Dichtungselement gemäß den Merkmalen des Oberbegriffs des Anspruches 1.

Im Einzelnen bezieht sich die Erfindung auf ein Dichtungselement mit einem im Wesentlichen ringförmigen Körper aus einem elastischen Material, welcher mittels verspannbarer Flanschringe in Axialrichtung quetschbar und damit deformierbar ist.

Ein Dichtungselement der genannten Art wird verwendet, um eine im Wesentlichen kreisrunde Öffnung, beispielsweise in einer Wand gegenüber einem durchgeführten Rohr oder einem durchgeführten Kabel, einer Leitung oder einem Stab abzudichten. Typischerweise erfolgt die Abdichtung gegenüber einem Mauerwerk, es sind erfindungsgemäß jedoch auch andere Anwendungsfälle möglich.

Durch die axiale Verspannung und Quetschung erfolgt eine Verpressung des Dichtungselements in radialer Richtung. Hierdurch erfolgt die Dichtung.

Eine Dichtungsvorrichtung der genannten Art ist beispielsweise aus der WO 03/058107 A1 vorbekannt.

Bei der Verwendung von Dichtringen mit einem im Wesentlichen rechteckigen Querschnitt, welche einzeln oder als Pakete bekannt sind, ergibt sich der Nachteil, dass sich der Dichtring oder das Dichtelement in radialer Richtung ausbaucht und mittig eine linienförmige Dichtfläche bildet. Die Ausbauchung erfolgt dabei radial nach innen und radial nach außen, so dass sowohl die Wandung der Ausnehmung, beispielsweise in einem Bauwerk oder einem größeren Rohr mit Druck beaufschlagt wird, als auch die Wandung des durchzuführenden Gegenstandes, beispielsweise des Rohrs, des Kabels, der Leitung oder des Stabes.

Durch die starke Verpressung, welche speziell im Bereich der Ausbauchung des Dichtelements auftritt, verliert das elastische Material des Dichtungselements seine elastischen Eigenschaften. Um zu einer zuverlässigen Dichtungswirkung zu gelangen und um eine sichere Abdichtung zu erreichen, muss die Quetschung damit zusätzlich erhöht werden.

Durch eine hohe Flächenpressung entlang der im Wesentlichen linienförmigen Dichtfläche, welche in einigen Fällen nur eine reine Dichtlinie ausbildet, werden jedoch auch in dem abzudichtenden Gegenstand (sowohl radial außenliegend als auch radial innenliegend) resultierende Spannungen erzeugt. Hieraus folgt, dass in nachteiliger Weise nicht nur das Dichtungsmaterial des Dichtungselements, sondern auch die durchgeführte, abzudichtende Leitung selbst sowie das Material der Ausnehmung relaxiert. Dies wirkt sich insbesondere bei Rohren oder isolierten Rohren besonders nachteilig aus, da deren Materialien unter hohen Belastungen kriechen, so dass über längere Zeiträume die Dichtwirkung entweder nachlässt oder verloren geht oder das abzudichtende, durchgeführte Rohr oder die Leitung selbst entsprechend deformiert werden.

Dieser Effekt tritt insbesondere bei durchgeführten Rohren, insbesondere bei Kunststoffrohren auf, während sich die nachteiligen Effekte bei den abzudichtenden Ausnehmungen, beispielsweise im Mauerwerk, Beton, metallischen Außenrohren oder Ähnlichem, nicht in so starkem Maße auswirken.

Die EP-A-1 837 572 beschreibt ein Dichtungssystem mit einem ringförmigen Körper aus elastischem Material, welcher in Axialrichtung quetschbar und damit verformbar ist. Der ringförmige Körper weist an seinem Umfang eine Vielzahl von Ringwülsten auf. Eine ähnliche Konstruktion zeigt die EP-A-0 838 623. Auch aus der WO 2006/118747 A ist ein ringförmiger Dichtungskörper mit Ringwülsten vorbekannt. In allen diesen Fällen werden die Ringwülste bei der axialen Verformung gequetscht. Die WO 01/81807 A offenbart eine Vorrichtung zum Abdichten eines von einem inneren und einem äußerem Körper begrenzten Ringraums mit einem Dichtelement, welches Ringnuten aufweist, in welchen hydrophiler Kautschuk angeordnet ist, um bei Nachlassen der Dichtwirkung und bei Undichtigkeiten eintretende Feuchtigkeit abzudichten. Die Kautschuklagen dienen nicht als Kompressionsdichtung.

Der Erfindung liegt die Aufgabe zugrunde, ein Dichtungselement der eingangs genannten Art zu schaffen, welches unter Vermeidung der Nachteile des Standes der Technik auch über einen langen Zeitraum hinweg eine gute Dichtwirkung gewährleistet.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass das ringförmige Dichtelement an zumindest einer radialem Seite des im Wesentlichen rechteckigen Querschnitts mit zumindest einer zusätzlichen Ringwulst versehen ist.

Erfindungsgemäß kann die Ringwulst an der radial innenliegenden Seite des Dichtelements ausgebildet sein, es ist jedoch auch möglich, die Ringwulst (auch zusätzlich) an der radial außenliegenden Seite vorzusehen.

Durch die erfindungsgemäß vorgesehene Ringwulst ändert sich somit die Geometrie des ringförmigen Dichtungselements, so dass eine bessere Abdichtung zu einer Leitung, einem Rohr oder Ähnlichem sowie auch zur Wandung einer Ausnehmung erfolgt.

In besonders günstiger Ausgestaltung der Erfindung ist vorgesehen, dass die Ringwulst einstückig mit dem Dichtungselement ausgebildet ist. Vorzugsweise ist sie aus dem gleichen Material wie das Dichtungselement gebildet, es ist jedoch auch möglich, unterschiedliche Materialien zu verwenden, die beispielsweise durch ein Insertverfahren in der Spritzgusstechnik oder durch andere Herstellungsverfahren zu einem einstückigen Dichtungselement verbunden werden.

In einer besonders vorteilhaften Ausgestaltung der Erfindung ist vorgesehen, dass zwei zueinander parallele Ringwülste an der radialen Wandung des Dichtungselementes ausgebildet sind. Hierdurch ergibt sich eine verbesserte Deformation und Verpressung, welche eine verbesserte Dichtwirkung zur Folge hat.

Die geometrische Ausgestaltung der Ringwulst kann den unterschiedlichen Anwendungsbedingungen, den zu verwendenden Materialien sowie den Dimensionierungen angepasst werden. Es kann günstig sein, die Seitenflanken der Ringwulst mit einem Radius zu versehen. Die radial äußere Außenfläche der Ringwulst selbst kann entweder eben oder konturiert ausgebildet sein.

Erfindungsgemäß ist vorgesehen, dass die einzelne Ringwulst an ihrer radialen Außenfläche mit zwei ringförmigen Erhebungen versehen ist, die über Radienbereiche miteinander verbunden sind.

Erfindungsgemäß ist somit eine Lösung geschaffen worden, bei welcher das Dichtungselement eine höhere Härte aufweisen kann und zugleich mit geringeren Anpresskräften zuverlässig abdichtet. Im Bereich der Dichtfläche (Ringwulst) ergibt sich aufgrund der höheren Freiheitsgrade eine niedrigere Verpressung, welche die Beibehaltung der elastischen Eigenschaften des Materials des Dichtungselements bzw. der Ringwulst sichert.

Im Folgenden wird die Erfindung anhand von Ausführungsbeispielen in Verbindung mit der Zeichnung beschrieben. Dabei zeigt:
- Fig. 1: eine Schnittansicht eines Quetschflansches gemäß dem Stand der Technik,
- Fig. 2: eine axiale Draufsicht auf ein nicht erfindungsgemäßes Dichtungselement,
- Fig. 3: eine Schnittansicht längs der Linie A-A von Fig. 2,
- Fig.4: eine perspektivische Ansicht des in Fig. 2 und 3 gezeigten Dichtungselements, und
- Fig.: 5 eine erfindungsgemäße Ausgestaltungsform in analoger Darstellung des Dichtungselement körpers 1.

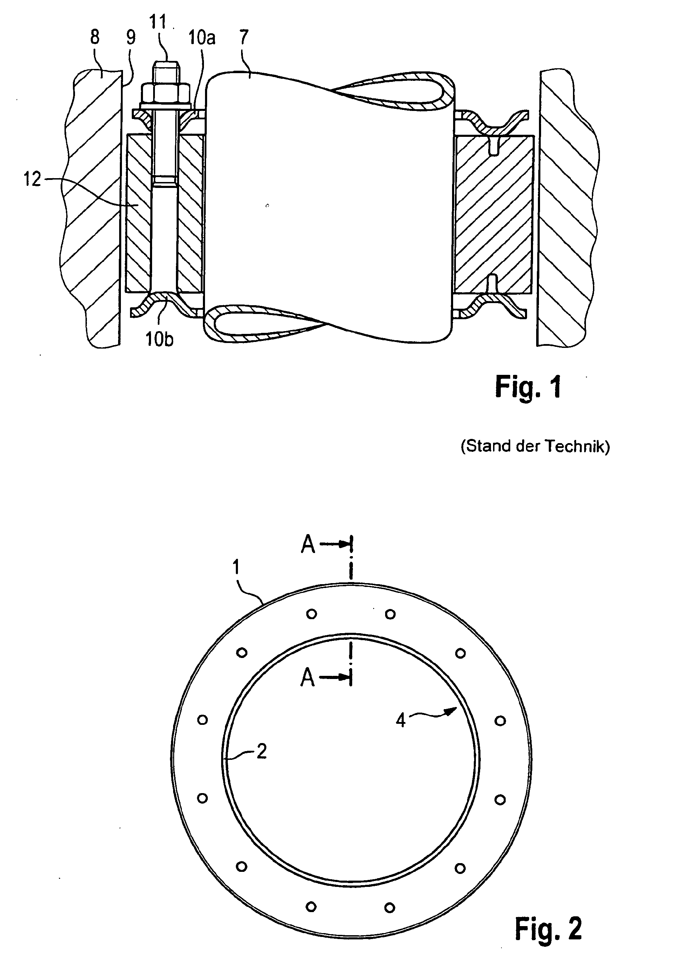

Die Fig. 1 zeigt eine Schnittansicht eines Rohres 7, welches gegenüber einer Ausnehmung 9 eines Mauerwerkes 8 mittels einer Quetschflansch-Dichtungsanordnung abgedichtet wird.

Hierzu sind ein ringförmiger oberer Quetschflansch 10a sowie ein zugeordneter unterer Quetschflansch 10b vorgesehen, welche mittels Schrauben gegeneinander in Axialrichtung verspannbar sind. Zwischen den Quetschflanschen 10 sind mehrere Dichtungselemente 12 angeordnet, welche durch die axiale Verspannung verquetscht und radial ausgebaucht werden. Durch den hierbei auftretenden Druck an der Oberfläche des Rohres 7 sowie der Ausnehmung 9 des Mauerwerkes 8 erfolgt die gewünschte Abdichtung.

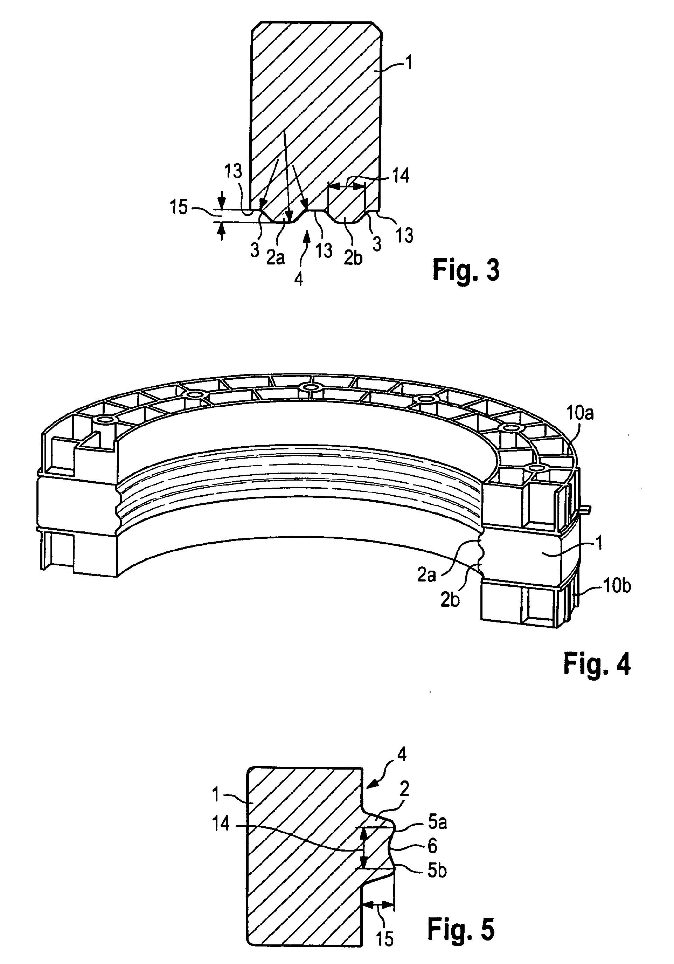

Die Fig. 2 bis 4 zeigen ein erstes Beispiel. Dabei weist ein Dichtungselementkörper 1 einen im Wesentlichen rechteckigen Querschnitt auf (siehe Fig. 3). Bei dem gezeigten Beispiel sind an der radial nach innen weisenden Seite des Dichtungselementkörpers 1 zwei Ringwülste 2a, 2b ausgebildet, welche parallel zueinander verlaufen und deren Seitenflanken jeweils über einen Radius 3 in die radial außenliegende Wandung 13 übergehen.

Durch die erfindungsgemäß vorgesehene, zumindest eine Ringwulst 2, welche an einer Außenfläche 4 bzw. deren Wandung 3 des Dichtelementkörpers 1 ausgebildet ist, ist es möglich, mit geringeren Anpresskräften eine ausreichende Abdichtung vorzusehen. Die geringeren Anpresskräfte ergeben sich dadurch, dass durch die geometrische Ausgestaltung der erfindungsgemäß vorgesehenen, zumindest einen Ringwulst 2 bei der Verpressung des Dichtelementkörpers 1 im Wesentlichen das Material des Dichtelementkörpers 1 verpresst wird, nicht jedoch das Material der vorstehenden Ringwulst 2 selbst. Dabei wird die Ringwulst 2 durch das sich ausbauchende Material des Dichtelementkörpers 1 radial nach außen und somit in Richtung auf das Rohr 7 bzw. die Ausnehmung 9 des Mauerwerks 8 gepresst.

Erfindungsgemäß wird somit nicht der dichtende Bereich, der durch die Ringwulst 2 gebildet wird, durch die axiale Verpressung verformt, sondern das radial hinter der Ringwulst 2 liegende Material des Dichtungselementkörpers 1. Das Material der Ringwulst 2 wird somit selbst nicht verpresst oder deformiert, sondern lediglich radial nach außen bzw. nach innen geschoben. Es versteht sich, dass nach einem entsprechenden Kontakt mit dem Mauerwerk 8 bzw. dem Rohr 7 auch eine Verformung des Materials der Ringwulst 2 erfolgt. Dies ist jedoch sekundär und nicht ursächlich bedingt durch die Verformung des Dichtelementkörpers 1 selbst.

Da erfindungsgemäß die Ringwulst 2 durch das axiale Verpressen selbst nur gering verpresst oder deformiert wird, ergibt sich im Bereich der Ringwulst 2 eine weitaus höhere Elastizität des Materials des gesamten Dichtungselements und damit eine wesentlich bessere Dichtwirkung.

Durch diese bessere Dichtwirkung ist es möglich, die Anpresskraft, welche in radialer Richtung auf das Rohr 7 bzw. die Ausnehmung 9 des Mauerwerks 8 wirkt, zu senken. Dies wiederum führt zu einem verbesserten Kriechverhalten sowohl des Materials des Rohrs 7 als auch der Ausnehmung 9 des Mauerwerks 8 (es ist an dieser Stelle nochmals zu betonen, dass die Bezugnahme auf das Rohr 7 und die Ausnehmung 9 des Mauerwerks 8 nur beispielhaft ist, erfindungsgemäß ist jede denkbare Paarung von Materialien oder Bauelementen möglich).

Durch den geringeren Anpressdruck werden somit mechanische Deformationen des Rohrs 7 vermieden. Dies ist insbesondere bei dünnwandigen Rohren oder Leitungen oder bei Rohren oder Leitungen, welche mit einer Isolierschicht versehen sind, von besonderem Vorteil, da deren Steifigkeit üblicherweise geringer ist. Erfindungsgemäß wird somit eine Aufbringung zu hoher Anpresskräfte und eine nachfolgende Einschnürung oder Deformation vermieden, welche zu einem Nachlassen der Dichtfunktion führen würde.

Erfindungsgemäß ist es durch Wahl einer geeigneten Breite 14 sowie einer geeigneten Höhe 15 (siehe Fig. 3) der Ringwulst 2 möglich, die Dichtfläche zu vergrößern, da die Ringwulst erfindungsgemäß nicht nur linienförmig anliegt, sondern über ihre gesamte radiale Außenfläche bzw. Innenfläche.

Durch die Verwendung mehrerer, zueinander paralleler Ringwülste (siehe Fig. 3 und 4) ist es möglich, durch die Vergrößerung der Dichtfläche nochmals eine Reduzierung der erforderlichen Flächenpressung zu erreichen.

Der Übergang zu den durch die Ringwulst 2 gebildeten Erhebungen ist bevorzugterweise mittels Radien 3 ausgebildet. Diese Radien können beispielsweise 0,5 bis 5 mm betragen.

Die Breite 14 der Ringwulst 2 kann erfindungsgemäß im Verhältnis zur Gesamtbreite (axiale Erstreckung) des Dichtelementkörpers 1 10% bis 60% sein. Bei kleineren Breiten 14 würde sich die Dichtfläche zu stark verringern, während bei einer größeren Breite eine axiale Verpressung der Ringwulst 2 erfolgt, welche deren Elastizität wiederum herabsetzen würde.

Die Höhe 15 der Ringwulst 2 ist erfindungsgemäß bevorzugt auf den Durchmesser des Rohres 7 abgestimmt, sie beträgt beispielsweise zwischen 3% und 30% der radialen Gesamtbreite des Dichtungselementkörpers 1. Eine geringere Höhe würde nicht die erfindungsgemäßen Vorteile hinsichtlich der Elastizität bringen, während bei einer größeren Höhe der Ringwulst 2 die Gefahr eines Wegknickens besteht.

Erfindungsgemäß ist die Gesamtbreite des Dichtungselements (axiale Erstreckung) abhängig von dem abzudichtenden Spalt, sie beträgt beispielsweise zwischen 10 mm und 50 mm.

Es ist möglich, die äußere Kontur der Ringfläche 2 im Wesentlichen eben auszubilden, so wie dies in Fig. 3 gezeigt ist. Erfindungsgemäß ist es vorgesehen, wie durch die Ausgestaltung der Fig. 5 gezeigt, die radiale Außenfläche der Ringwulst 2 mit zwei rippenartigen oder ringartigen Erhebungen 5a, 5b auszubilden, welche über einen Radienbereich 6 miteinander verbunden sind. Hierdurch ergeben sich durch die Erhebungen 5a, 5b Außenflanken, welche stärker erhöht, d.h., in radialer Richtung verbreitert sind. Durch die axiale Verspannung des Dichtungselementkörpers 1 ergibt sich bei der in Fig. 5 gezeigten Ausgestaltung durch die auftretende Deformation im eingebauten Zustand eine ebene, äußere Anlagefläche der Ringwulst 2, da der Radienbereich 6 zwischen den rippenartigen Erhebungen 5a und 5b entsprechend verformt wird.

Erfindungsgemäß ist es auch möglich, bei Verwendung mehrerer Ringwülste 2 (analog Fig. 3) unterschiedliche Geometrien vorzusehen.

Durch die erfindungsgemäß vorgesehene geringere Deformation des Materials der Ringwulst 2, verglichen mit der Deformation des Materials des Dichtelementkörpers 1, ergeben sich wesentlich bessere elastische Eigenschaften des Materials der Ringwulst 2. Dies resultiert in einer höheren Elastizität, welche wiederum zu geringeren erforderlichen Anpresskräften führt. Somit ist es erfindungsgemäß insbesondere möglich, alternativ zu einem EPDM-Material (Ethylen-Propylen-DienKautschuk) auch andere Materialien mit größerer Härte zu verwenden. So ist es erfindungsgemäß beispielsweise möglich, NBR (Acrylnitril-Butadien-Kautschuk) einzusetzen. Hierdurch ist es möglich, auch gasdichte Durchführungen zu realisieren. Es ist erfindungsgemäß auch möglich, Naturkautschuk oder andere Kunststoffe aus der Gruppe der Elastomere zu verwenden. Während im Stand der Technik die notwendige Härte des Elastomers bei 30 bis 35 ShoreA bei Anwendung für isolierte Rohre und Rohre mit hoher Kriechneigung liegt, können erfindungsgemäß auch Werkstoffe mit einer ShoreA-Härte von 40 und größer verwendet werden.

Durch die geringeren auftretenden Kräfte, durch die daraus resultierende geringere Kriechneigung des Materials des Rohrs 7, aber auch durch die geringere Relaxation des Materials des Dichtungselementkörpers 1, können erfindungsgemäß auch Materialien außerhalb der Gruppe der Elastomere verwendet werden. So ist es möglich, das erfindungsgemäße Dichtungselement auch aus TPE (thermoplastische Elastomere) zu fertigen. Hierdurch vereinfacht sich der Herstellungsaufwand, da diese Materialien thermoplastisch verarbeitbar sind.

Erfindungsgemäß ist es somit möglich, Rohre 7, Leitungen, Kabel oder Ähnliches mit geringerer Steifigkeit dauerhaft abzudichten und längere Standzeiten, bedingt durch die bessere Elastizität im Dichtungsbereich der Ringwülste 2 durch die auftretende geringere Relaxation zu erzielen.

Das erfindungsgemäße Dichtungselement ist für unterschiedlichste Durchmesser geeignet, bevorzugterweise werden Rohre 7, Leitungen oder Ähnliches im Bereich von 150 mm bis 320 mm Außendurchmesser mittels des erfindungsgemäßen Dichtungselements abgedichtet.

### Bezugszeichenliste

- 1: Dichtungselementkörper
- 2, 2a, 2b: Ringwulst
- 3: Radius
- 4: Außenfläche
- 5a, 5b: Erhebung
- 6: Radienbereich
- 7: Rohr
- 8: Mauerwerk
- 9: Ausnehmung
- 10: Quetschflansch/Flanschring
- 11: Schraube
- 12: Dichtungselement
- 13: Wandung
- 14: Breite
- 15: Höhe

## Patentansprüche

1. Dichtungselement mit einem im Wesentlichen ringförmigen Körper (1) aus einem elastischen Material, wobei der Körper (1) mit einem im Wesentlichen rechteckigen Querschnitt versehen ist und in Axialrichtung des Dichtungselements verformbar ist, wobei an dem Körper (1) an zumindest einer radialem Seite zumindest eine Ringwulst (2) angeordnet ist, **dadurch gekennzeichnet, dass** die radiale Außenfläche (4) der Ringwulst (2) konturiert ausgebildet ist und zwei ringförmige Erhebungen (5a, 5b) aufweist, welche über Radienbereiche (6) miteinander verbunden sind.

2. Dichtungselement nach Anspruch 1, **dadurch gekennzeichnet, dass** der Körper (1) und die Ringwulst (2) einstückig miteinander verbunden sind.

3. Dichtungselement nach Anspruch 1 oder 2, **dadurch gekennzeichnet, dass** der Körper (1) und die Ringwulst (2) aus einem gleichen Material gefertigt sind.

4. Dichtungselement nach Anspruch 1 oder 2, **dadurch gekennzeichnet, dass** der Körper (1) und die Ringwulst (2) aus unterschiedlichen Materialien gefertigt sind.

5. Dichtungselement nach einem der Ansprüche 1 bis 4, **dadurch gekennzeichnet, dass** zwei zueinander parallele Ringwülste (2a, 2b) an der zumindest einen Seite des Körpers (1) angeordnet sind.

6. Dichtungselement nach einem der Ansprüche 1 bis 5, **dadurch gekennzeichnet, dass** zumindest eine Seitenflanke der Ringwulst (2) mit einem Radius (3) versehen ist.

7. Dichtungselement nach einem der Ansprüche 1 bis 7, **dadurch gekennzeichnet, dass** dieses aus einem Ethylen-Propylen-Dien-Kautschuk(EPDM)-Material gefertigt ist.

8. Dichtungselement nach einem der Ansprüche 1 bis 7, **dadurch gekennzeichnet, dass** dieses aus einem Acrylnitril-Butadien-Kautschuk(NBR)-Material gefertigt ist.

9. Dichtungselement nach einem der Ansprüche 1 bis 7, **dadurch gekennzeichnet, dass** dieses aus einem Elastomer-Werkstoff gefertigt ist.

10. Dichtungselement nach einem der Ansprüche 1 bis 7, **dadurch gekennzeichnet, dass** dieses aus einem Naturkautschuk-Material gefertigt ist.

11. Dichtungselement nach einem der Ansprüche 1 bis 7, **dadurch gekennzeichnet, dass** dieses aus einem thermoplastischen Elastomer-Material gefertigt ist.

12. Quetschflansch mit zumindest zwei in axialer Richtung gegeneinander verspannbaren Flanschringen (10) sowie mit zumindest einem zwischen den Flanschringen (10) angeordneten Dichtungselement, welches nach einem der Ansprüche 1 bis 12 ausgebildet ist.

## Claims

1. A sealing member comprising a substantially annular body (1) made of an elastic material, the body (1) being provided with a substantially rectangular cross-section and being deformable in the axial direction of the sealing member, wherein at least one annular bead (2) is arranged at the body (1) on at least a radial side thereof, **characterized in that** the radial outer surface (4) of the annular bead (2) is shaped as a contour and comprises two annular projections (5a, 5b) which are connected to each other through radial portions (6).

2. The sealing member of claim 1, **characterized in that** the body (1) and the annular bead (2) are integrally connected.

3. The sealing member of claim 1 or 2, **characterized in that** the body (1) and the annular bead (2) are made of the same material.

4. The sealing member of claim 1 or 2, **characterized in that** the body (1) and the annular bead (2) are made of different materials.

5. The sealing member of one of claims 1 to 4, **characterized in that** two parallel annular beads (2a, 2b) are arranged on the at least one side of the body (1).

6. The sealing member of one of claims 1 to 5, **characterized in that** at least a lateral flank of the annular bead (2) is provided with a radius (3).

7. The sealing member of one of claims 1 to 6, **characterized in that** same is made of an ethylene-propylene-dien-rubber (EPDM) material.

8. The sealing member of one of claims 1 to 7, **characterized in that** same is made of an acrylnitrile-butadien-rubber (NBR) material.

9. The sealing member of one of claims 1 to 7, **characterized in that** same is made of an elastomer material.

10. The sealing member of one of claims 1 to 7, **characterized in that** same is made of an natural rubber material.

11. The sealing member of one of claims 1 to 7, **characterized in that** same is made of an thermoplast elastomer material.

12. A transverse flange comprising at least two flange rings (10) which can be tensioned against each other in the axial direction as well as at least one sealing member arranged between the flange rings (10), which sealing member is formed according to one of claims 1 to 11.

## Revendications

1. Elément d'étanchéité présentant un corps sensiblement annulaire (1) en un matériau élastique, le corps (1) étant pourvu d'une section essentiellement rectangulaire et pouvant être déformé dans le sens axial de l'élément d'étanchéité, sachant qu'au moins un bourrelet annulaire (2) est disposé sur le corps (1) sur au moins un côté radial, **caractérisé en ce que** la surface extérieure radiale (4) du bourrelet annulaire (2) est réalisée avec un contour et présente deux élévations annulaires (5a, 5b) reliées entre elles par des zones de rayon (6).

2. Elément d'étanchéité selon la revendication 1, **caractérisé en ce que** le corps (1) et le bourrelet annulaire (2) sont reliés l'un à l'autre d'un seul tenant.

3. Elément d'étanchéité selon la revendication 1 ou 2, **caractérisé en ce que** le corps (1) et le bourrelet annulaire (2) sont fabriqués en un matériau identique.

4. Elément d'étanchéité selon la revendication 1 ou 2, **caractérisé en ce que** le corps (1) et le bourrelet annulaire (2) sont fabriqués dans des matériaux différents.

5. Elément d'étanchéité selon l'une quelconque des revendications 1 à 4, **caractérisé en ce que** deux bourrelets annulaires parallèles (2a, 2b) sont disposés sur au moins un côté du corps (1).

6. Elément d'étanchéité selon l'une quelconque des revendications 1 à 5, **caractérisé en ce qu'**au moins un flanc latéral du bourrelet annulaire (2) est pourvu d'un rayon (3).

7. Elément d'étanchéité selon l'une quelconque des revendications 1 à 7, **caractérisé en ce que** celui-ci est fabriqué en un matériau de caoutchouc d'éthylène, propylène et diène (EPDM).

8. Elément d'étanchéité selon l'une quelconque des revendications 1 à 7, **caractérisé en ce que** celui-ci est fabriqué en un matériau de caoutchouc d'acrylonitrile-butadiène (NBR).

9. Elément d'étanchéité selon l'une quelconque des revendications 1 à 7, **caractérisé en ce que** celui-ci est fabriqué en un matériau d'élastomère.

10. Elément d'étanchéité selon l'une quelconque des revendications 1 à 7, **caractérisé en ce que** celui-ci est fabriqué en un matériau de caoutchouc naturel.

11. Elément d'étanchéité selon l'une quelconque des revendications 1 à 7, **caractérisé en ce que** celui-ci est fabriqué en un matériau d'élastomère thermoplastique.

12. Bride compressible présentant au moins deux anneaux de bride (10) pouvant être tendus l'un contre l'autre dans le sens axial ainsi qu'au moins un élément d'étanchéité disposé entre les anneaux de bride (10), réalisé selon l'une quelconque des revendications 1 à 12.
